# EUROPEAN PATENT SPECIFICATION

(11) **EP 2 465 375 B1**
(45) Date of publication and mention of the grant of the patent: **28.08.2013**
(21) Application number: 11191802.5
(22) Date of filing: 02.12.2011
(51) Int. Cl.: A45D 40/16

(54) **Mould extraction device for cosmetic pencil cores**
Formentnahmevorrichtung für Kosmetikstiftkerne
Dispositif d'extraction de moule pour coeur de crayon cosmétique

(30) Priority: 17.12.2010 IT MI20102314
(43) Date of publication of application: 20.06.2012
(73) Proprietor: Chromavis S.P.A., 20122 Milano (IT)
(72) Inventor: Larceri, Nicola, 20077 MELEGNANO (MI) (IT)
(74) Representative: Vanosi, Adelio Valeriano

(56) References cited:
- EP-A1- 0 723 880
- EP-A2- 0 966 898
- DE-A1- 4 016 474
- US-A- 4 082 491

## Description

The present invention relates to a mould extraction device for cosmetic pencil cores.

Cosmetic pencil cores, especially those housed in core holders, are known to be cast in suitable moulds. The core holders can be for example of automatic or screw type.

Known moulds are normally constructed of aluminium or steel and present a through hole with a diameter substantially equal to that of the core to be formed.

The cosmetic product is prepared by hot mixing its various components (waxes, oils, pigments, excipients, active components, perfumes/fragrances and preservatives). The mixture is then cast into the hole, suitably closed at one end, while the product is still hot and hence fluid. The product is then left to solidify after which, after removing the hole closure, the various cores are extracted.

For the extraction, pushers are used which by penetrating into the mould hole urge the core outwards.

Automation requirements have led to the construction of automatic or semi-automatic machines which perform the extraction while simultaneously inserting the just extracted core into the respective core holder.

To increase production rate, moulds are also available presenting a plurality of holes in which the cores are cast. The extraction machines present a plurality of pushers which, by penetrating into the mould holes, extract the cores by urging them outwards. These extraction machines also present a plurality of seats to be fixed below the core holder holes in which the just extracted cores are to be housed.

The machines of the known art present considerable drawbacks given the delicacy and variety of cores. In particular, those cores used for eye and lip makeup have to use soft pastes which result in more fragile cores easily deformable during extraction. These cores are in fact subjected to the mechanical thrust actions exerted by the pushers and can break especially in the contact region between the core and pusher.

To obviate these problems, pushers of the known art are provided with a tip presenting a conical cavity which mates with the core tip already shaped by the mould.

Essentially, by mating the hollow conical tip of the pusher with the core tip, the possibility of core breakage is reduced.

Although effective with very rigid cores, which tend to break, this technical expedient is totally counter-productive in the case of very soft cores.

In this case the material with which the core is formed tends in fact to adhere to the pusher. In particular, the conical cavity of the pusher becomes considerably soiled and the various pieces which separate from the core during extraction remain stuck to it.

This creates problems both because the core finish is not perfect, and because the residues remaining in the cavity can contaminate the colour of successive cores which the extraction machine is required to extract.
EP 0966898 A2 describes a device to extract cores from moulds according to the precharacterizing portion of claim 1. An object of the present invention is therefore to provide a mould extraction device for cosmetic pencil cores which overcomes the drawbacks of the known art.

A particular object of the present invention is to provide an extraction system for cosmetic pencil cores which is suitable for extracting both rigid cores and soft cores, and enables cores of different colours to be extracted in succession without having to intervene to systematically clean the pushers.

These and other objects are attained by providing a mould extraction device for cosmetic pencil cores in accordance with the technical teachings of the accompanying claims.

Further characteristics and advantages of the invention will be apparent from the description of a preferred but on-exclusive embodiment of the device, illustrated by way of non-limiting example in the accompanying drawings, in which:
Figure 1 is a perspective view of the device of the present invention;
Figure 2 is a through section taken on the line 2-2 of Figure 3 of an extractor pusher of the device of Figure 1;
Figure 3 is a plan view of the pusher of Figure 2;
Figures 4A, 4B and 4C show a sequence of mould extraction and positioning of an extracted core in a core holder.

With reference to said figures, these show an extraction device for cosmetic pencil cores, indicated overall by the reference numeral 1.

The device comprises fixing means for a mould in which at least one core has been previously cast in a through hole provided in said mould. Essentially the various components of the material intended to form the core are hot mixed, to assume a fluid consistency.

One end of the hole present in the mould is then closed and the fluid material is cast into the hole.

When it has solidified, the hole closure is removed and the mould is positioned on the device of the present invention. Advantageously each mould presents several holes in which the cores are formed, the casting operations involving all the holes simultaneously. In the case under examination the mould comprises 12 holes, for the consequent production of 12 cores.

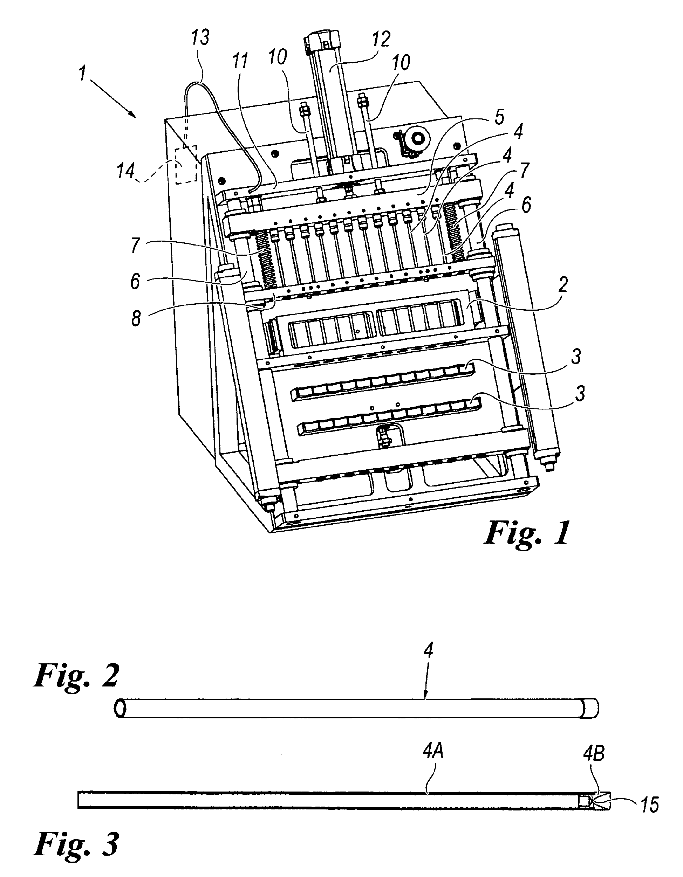

As already described, the device of Figure 1 presents fixing means for the mould 2. These fixing means are of conventional type and present centring pegs (not shown) and electromagnetic plates which, once activated, rigidly immobilize the mould.

The electromagnetic plates can be replaced by other similar technical means, such as quick release couplings or the like.

The device of the invention also presents core holder locking means. In the illustrated embodiment, these locking means are positioned below the mould and are arranged to fix twelve core holders coaxially with the 12 holes of the mould 2, in which the cores are cast.

These locking means are also of conventional type and depend on the type of core holder to be fixed.

A series of pushers 4 are provided above the fixing means. The pushers are provided in a number equal to the number of holes in the mould. Each of them presents a tubular body 4A, to one end of which a profiled head 4B is fixed. When in use, this head 4B faces the core to be extracted. The pushers are fixed to a movable crosspiece 5 slidable along guides 6 against springs 7. The movable crosspiece 5 presents further upper guides 10 engaged in a fixed first crosspiece. The springs 7 rest against an adjustable second crosspiece 8, the position of which relative to the mould can be set. The adjustable crosspiece is also engaged with the guides 6, and acts as a limit stop for the pushers 4 which strike against it. The movement of the pushers 4, and hence of the movable crosspiece 5, is controlled by a pneumatic piston 12, of known type.

Essentially the guides, the crosspiece and the pneumatic piston 12 act as drive means to mutually move each pusher relative to the mould, between a first position in which said pusher is external to said hole and a second position in which said pusher is internal to said hole and occupies it for a length such as to be able to expel the core present in the hole.

According to the present invention, the movable crosspiece presents a compressed air inlet connected to a pipe 13 which connects it to a compressed air generator 14.

The crosspiece 5 hence distributes the compressed air received by the pipe 13 to the pushers 4, enabling the cavity located inside each of them to be pressurized.

As can be seen from the sectional view of Figure 3, the head 4B presents an air passage 15 which connects the cavity of each pusher to their outer end facing the core. A single air passage can be provided, or several passages distributed within the head.

In the described embodiment, the head 4B preferably presents a profiled portion substantially corresponding to the shape of the tip of the core to be extracted from the mould.

An automatic valve can preferably be provided to enable or prevent air passage to each pusher, such as to be able to exclude pressurization even of only one of the pushers.

Alternatively, as in the embodiment described herein, a single control valve can be provided upstream of the pipe 13. Hence the action of the valve enables all the pushers to be pressurized. Essentially the device presents means for injecting pressurized fluid between the pusher surface facing the core and said core, to facilitate core extraction from the hole. The positioning of each pusher is such as to be coaxial with the hole in the mould, and is of such diameter as to be able to penetrate into it. Advantageously the pusher diameter is slightly less than the core diameter, indicatively one and a half tenths of a millimetre less than the diameter of the core to be extracted.

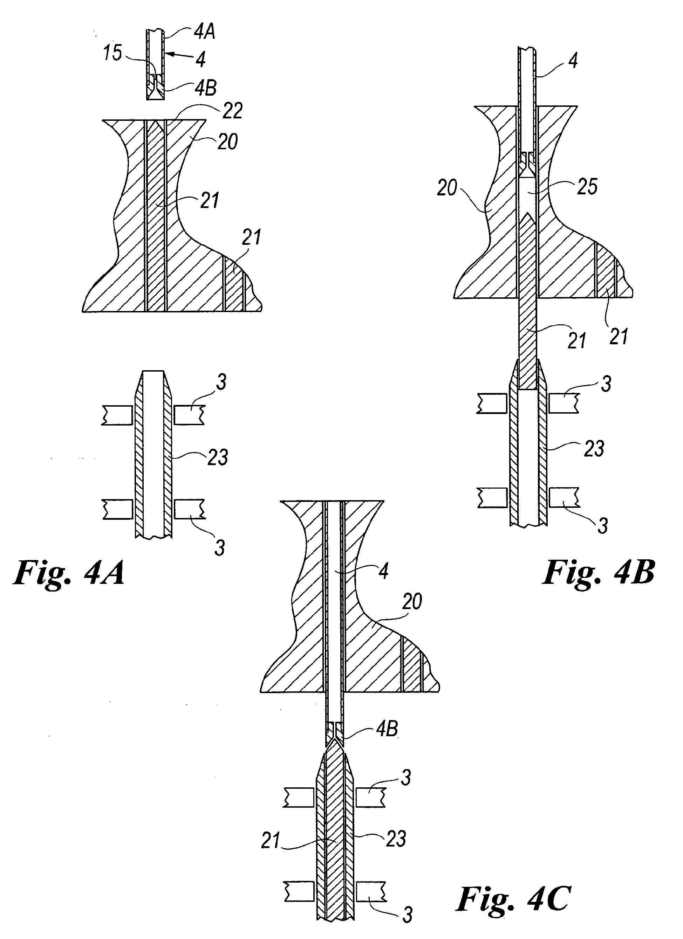

The operation of the invention is apparent to the skilled in the art from that described and illustrated in Figures 4A-4C. These show by way of example the movement of a single pusher, however the description is evidently valid for all the simultaneously moving pushers. The operation is as follows.

The mould 20 contains the cast and solidified cores 21, and is fixed to the fixing means 2. The pusher 4 occupies a first position and is external to the mould 20, however it is coaxial with the hole 22. The core 21 has its tip facing the pusher 40. The pusher head 4B faces the tip of the core 21. At cycle commencement the position of the limit stop crosspiece 8 is adjusted and the compressed fluid generating means 14 are operated. The solenoid valve present in the pipe 13 is then opened.

Compressed air begins to flow from the passage 15. This compressed air eliminates any colour deposits present on the pusher head.

The piston 12 urges the crosspiece 5 downwards, consequently pushing the pusher 4 towards the core 21.

As soon as the pusher head enters the mould hole 22 a high pressure region (a sort of air cushion 25) is generated between the core and the head 4B. The presence of the air cushion, or compressed fluid, enables the core to be pushed without the pusher touching its tip. In addition the compressed air present in the hole flows out onto the perimeter of the core, so detaching it from the mould and hence facilitating its extraction. Advantageously the pressure at which the air is fed is between 0.5 and 7 bar, preferably 2 bar.

This pressure enables delicate expulsion for soft cores and no breakage danger for more rigid cores.

The cores 21 partially expelled from the mould (Figure 4B) penetrate into the core holder 23, with further pusher movement resulting in its final extraction and locking inside the core holder (Figure 4C).

It should be noted that the air flow has many advantageous effects on the extraction and the positioning of the core within the core holder. In this respect, as already stated, both when the pusher is in the hole and when the pusher is outside the hole and urges the core into the core holder, a sort of air cushion exists between the pusher head and the core, which minimizes or nullifies the possibility of contact between these elements, or at least makes any contact very delicate.

The shape of the pusher head, corresponding or substantially corresponding to that of the core (and hence conical) makes it possible to form the air cushion even outside the mould.

Depending on the type of core to be extracted from the mould, the core expulsion and its insertion into the core holder can be substantially effected automatically, hence without contact between the pusher and core.

The presence of an air flow at the core-pusher interface also facilitates pusher head cleaning, should contact take place between the pusher head and the core. This is very useful in the case of soft cores which tend to crumble.

One embodiment of the invention has been illustrated, however others can be conceived utilizing the same inventive concept. For example, moulds can be provided with more or less holes, and consequently more or less pushers.

## Claims

1. A mould extraction device (1) for cosmetic pencil cores (21), comprising fixing means for a mould (20) in which at least one core has been previously cast in a through hole provided in said mould, locking means (3) for a core holder to fix this latter coaxially with the through hole of the mould in which the core was cast, at least one pusher (4) positioned coaxially with the hole and of diameter such as to be able to penetrate into it, and drive means for mutually moving said pusher and said mould from a first position in which said pusher is external to said hole to a second position in which said pusher is internal to said hole and occupies it for a length such as to be able to expel the core present in the hole, **characterised by** presenting means (15, 4B) for injecting pressurized fluid between that pusher surface facing the core and said core, such as to facilitate core extraction from the hole.

2. A device as claimed in the preceding claim, wherein said pressurized fluid injection means comprise at least one passage (15) formed in a position corresponding with that end of the pusher facing the core.

3. A device as claimed in the preceding claim, wherein said passage is in communication with a cavity of the pusher (4), said cavity being fed by means for generating a pressurized fluid (14).

4. A device as claimed in one or more of the preceding claims, wherein that pusher surface facing the core presents a configuration corresponding to that of the tip of the core to be extracted.

5. A device as claimed in one or more of the preceding claims, wherein that surface facing the core presents a plurality of holes in communication with the pressurized rod cavity.

6. A device as claimed in one or more of the preceding claims, wherein the pressure at which air is injected between the core and pusher is between 0.5 and 7 bar, preferably 2 bar.

7. A device as claimed in one or more of the preceding claims, wherein said pusher (4) is formed from a tubular element, to one end of which a closure head (4B) is fixed defining said surface facing the core.

8. A device as claimed in one or more of the preceding claims, wherein each pusher presents a valve which controls the pressurization of each pusher.

9. A method for extracting cosmetic pencil cores from a mould with the device of claim 1, the cores (21) being disposed in holes in which their constituent material is hot cast and left to solidify, comprising the step of inserting a pusher (4) into the hole, injecting an air flow between the pusher and core, and moving the pusher along the hole until the core has been completely extracted.

## Patentansprüche

1. Abguss-Extraktionsvorrichtung (1) für Kosmetikstift-Kerne (21), die umfasst: Fixiermittel für einen Abguss (20), bei dem mindestens ein Kern zuvor in einer Durchgangsbohrung, die in dem Abguss bereitgestellt ist, abgegossen wurde, Verschlussmittel (3) für einen Kernhalter, um Letzteren koaxial mit der Durchgangsbohrung des Abgusses, in dem der Kern abgegossen wurde, zu fixieren, mindestens ein Druckstück (4), das koaxial mit dem Loch positioniert ist und einen solchen Durchmesser hat, dass es in dieses eindringen kann, und Antriebsmittel zum gegenseitigen Bewegen des Druckstückes und des Abgusses von einer ersten Position, in der das Druckstück außerhalb des Loches ist, in eine zweite Position, in der das Druckstück innerhalb des Loches ist und es derart entlang einer Länge ausfüllt, dass es den im Loch befindlichen Kern herausstoßen kann, **gekennzeichnet durch** Zugangsmittel (15, 4B) zum Injizieren eines unter Druck stehenden Fluids zwischen derjenigen Oberfläche des Druckstücks, die dem Kern zugewandt ist, und dem Kern, um derart Extraktion des Kerns aus dem Loch zu fördern.

2. Vorrichtung, wie in dem voranstehenden Anspruch beansprucht, wobei das Injektionsmittel für das unter Druck stehende Fluid mindestens einen Durchlass (15) umfasst, der an einer Position ausgebildet ist, die mit demjenigen Ende des Druckstücks korrespondiert, welches dem Kern zugewandt ist.

3. Vorrichtung, wie in dem voranstehenden Anspruch beansprucht, wobei der Durchlass in Verbindung mit einem Hohlraum des Druckstücks (4) steht, wobei der Hohlraum von einem Mittel zum Erzeugen eines unter Druck stehenden Fluids (14) versorgt wird.

4. Vorrichtung, wie in einem oder mehreren der voranstehenden Ansprüche beansprucht, wobei diejenige Druckstückoberfläche, die dem Kern zugewandt ist, eine Konfiguration bereitstellt, die mit derjenigen der Spitze des zu extrahierenden Kerns korrespondiert.

5. Vorrichtung, wie in einem oder mehreren der voranstehenden Ansprüche beansprucht, wobei diejenige Oberfläche, die dem Kern zugewandt ist, eine Vielzahl von Löchern, die in Verbindung mit dem unter Druck stehenden Stabhohlraum sind, bereitstellt.

6. Vorrichtung, wie in einem oder mehreren der voranstehenden Ansprüche beansprucht, wobei der Druck, bei dem Luft zwischen den Kern und das Druckstück injiziert wird, zwischen 0,5 und 7 bar liegt, vorzugsweise bei 2 bar.

7. Vorrichtung, wie in einem oder mehreren der voranstehenden Ansprüche beansprucht, wobei das Druckstück (4) aus einem röhrenförmigen Element ausgebildet ist, wobei an einem Ende von diesem ein Verschlusskopf (4B) fixiert ist, der die Oberfläche, die dem Kern zugewandt ist, definiert.

8. Vorrichtung, wie in einem oder mehreren der voranstehenden Ansprüche beansprucht, wobei jedes Druckstück ein Ventil bereitstellt, welches das Unter-Druck-Setzen von jedem Druckstück steuert.

9. Verfahren zum Extrahieren von Kosmetikstift-Kernen aus einem Abguss mit der Vorrichtung des Anspruchs 1, wobei die Kerne (21) in Löchern angeordnet sind, in welchen deren Konstituentenmaterial heißer Abguss ist und dort zum Aushärten gelassen wird, den Schritt umfassend: Einführen eines Druckstücks (4) in das Loch, Injizieren eines Luftstroms zwischen dem Druckstück und dem Kern und Bewegen des Druckstücks entlang des Lochs, bis der Kern vollständig extrahiert wurden ist.

## Revendications

1. Dispositif d'extraction de moule (1) pour des coeurs de crayons cosmétiques (21), comprenant des moyens de fixation pour un moule (20) dans lequel au moins un coeur a été préalablement coulé dans un trou traversant prévu dans ledit moule, des moyens de verrouillage (3) permettant à un support de coeur de fixer ce dernier de manière coaxiale par rapport au trou traversant du moule dans lequel le coeur a été coulé, au moins un poussoir (4) positionné de manière coaxiale par rapport au trou et d'un tel diamètre qu'il est en mesure d'y pénétrer, et des moyens d'entraînement pour déplacer mutuellement ledit poussoir et ledit moule depuis une première position dans laquelle ledit poussoir est à l'extérieur dudit trou jusqu'à une seconde position dans laquelle ledit poussoir est à l'intérieur dudit trou et l'occupe sur une telle longueur qu'elle permet d'expulser le coeur présent dans le trou, **caractérisé par** des moyen de présentation (15, 4B) pour injecter du fluide sous pression entre la surface de poussoir faisant face au coeur et ledit coeur, de manière à faciliter l'extraction du coeur depuis le trou.

2. Dispositif selon la revendication précédente, dans lequel ledit moyen d'injection de fluide sous pression comprend au moins un passage (15) formé dans une position correspondant à l'extrémité du poussoir faisant face au coeur.

3. Dispositif selon la revendication précédente, dans lequel ledit passage est en communication avec une cavité du poussoir (4), ladite cavité étant alimentée par des moyens permettant de générer un fluide sous pression (14).

4. Dispositif selon l'une ou plusieurs des revendications précédentes, dans lequel la surface de poussoir faisant face au coeur présente une configuration correspondant à celle de l'extrémité du coeur destiné à être extrait.

5. Dispositif selon l'une ou plusieurs des revendications précédentes, dans lequel la surface faisant face au coeur présente une pluralité de trous en communication avec la cavité de la tige sous pression.

6. Dispositif selon l'une ou plusieurs des revendications précédentes, dans lequel la pression à laquelle l'air est injecté entre le coeur et le poussoir est comprise entre 0,5 et 7 bar, de préférence 2 bar.

7. Dispositif selon l'une ou plusieurs des revendications précédentes, dans lequel ledit poussoir (4) est formé d'un élément tubulaire, à une extrémité duquel une tête de fermeture (4B) est fixée définissant ladite surface faisant face au coeur.

8. Dispositif selon l'une ou plusieurs des revendications précédentes, dans lequel chaque poussoir présente une soupape qui commande la mise sous pression de chaque poussoir.

9. Procédé permettant l'extraction de coeurs de crayons cosmétiques d'un moule avec le dispositif selon la revendication 1, les coeurs (21) étant disposés dans des trous dans lesquels leur matériau constitutif est moulé à chaud et laissé pour se solidifier, comprenant les étapes consistant à insérer un poussoir (4) dans le trou, injecter un flux d'air entre le poussoir et le coeur, et déplacer le poussoir le long du trou jusqu'à ce que le coeur ait été complètement extrait.
